(19) **Europäisches Patentamt**
**European Patent Office**
**Office européen des brevets**

(11) **EP 1 289 197 B1**

(12) **EUROPEAN PATENT SPECIFICATION**

(45) Date of publication and mention
of the grant of the patent:
**28.09.2016 Bulletin 2016/39**

(51) Int Cl.:
**H04W 48/16** *(2009.01)*

(21) Application number: **01120567.1**

(22) Date of filing: **29.08.2001**

(54) **A method and units to enhance mobile communication networks with ad-hoc scenarios**

Verfahren und Vorrichtungen zur Verbesserung von Mobilfunknetzen mit Ad-hoc-Szenarien

Procédé et installations pour améliorer des réseaux de communication mobile avec des scénarios ad-hoc

(84) Designated Contracting States:
**DE FI FR GB IT**

(43) Date of publication of application:
**05.03.2003 Bulletin 2003/10**

(73) Proprietor: **Sony Deutschland GmbH**
**10785 Berlin (DE)**

(72) Inventors:
• **Mandato, Davide,**
**Sony International (Europe) GmbH**
**70327 Stuttgart (DE)**
• **Kovacs, Ernö,**
**Sony International (Europe) GmbH**
**70327 Stuttgart (DE)**

(74) Representative: **Witte, Weller & Partner**
**Patentanwälte mbB**
**Postfach 10 54 62**
**70047 Stuttgart (DE)**

(56) References cited:
EP-A- 1 093 097    WO-A-01/48715
WO-A-01/63425    US-A1- 2001 018 330

• **EUSTICE K F ET AL: "A universal information appliance" IBM SYSTEMS JOURNAL, IBM CORP. ARMONK, NEW YORK, US, vol. 38, no. 4, 1999, pages 575-601, XP002157988 ISSN: 0018-8670**
• **HAARTSEN J C: "THE BLUETOOTH RADIO SYSTEM" IEEE PERSONAL COMMUNICATIONS, IEEE COMMUNICATIONS SOCIETY, US, vol. 7, no. 1, February 2000 (2000-02), pages 28-36, XP000908653 ISSN: 1070-9916**

**Description**

FIELD AND BACKGROUND OF THE INVENTION

The underlying invention generally relates to the field of mobile communication networks, ad-hoc networking and service provisioning in communication networks with high-speed access, especially to a technology concerning the enhancement of conventional mobile telecommunications architectures with ad-hoc networking and ad-hoc scenarios, thereby including authentication, authorization and accounting (AAA) issues. Moreover, a method and a software architecture designed to cope with the requirements derived by said technology implementing a new business model is disclosed.

Mobile wireless data communication is a driving force, thanks to the Internet and the success of second-generation cellular systems. In the future, the capabilities of short-range data transaction are expected to grow, serving as a complement to traditional large-scale communication, since most man-machine communication as well as oral communication between human beings occurs at distances of less than 10 meters. As an enabling factor for exchanging data, license-exempted frequency bands invite the use of developing radio technologies (like Bluetooth) that admit effortless and inexpensive deployment of wireless communication. In terms of price, portability and usability, many computing and communication devices, such as Personal Digital Assistants (PDAs) and mobile phones, already possess the features which are desirable in the context of mobile ad-hoc networks (MANETs). As advances in technology continue, these features will be enhanced even further. Finally, it must be noted that many mobile phones and other electronic devices already are or will soon be Bluetooth-enabled. Consequently, the ground for building more complex ad-hoc networks is being laid. In terms of market acceptance, the realization of MANETs is supposed to be positive. But perhaps even more positive - as relates to the end-user - is that consumers of Bluetooth-enabled devices obtain a lot of ad-hoc functionality at virtually no cost.

Perhaps the most widespread notion of a MANET is a network formed without any central administration which consists of mobile nodes using a wireless interface to transmit packet data. Since the nodes in a mobile network of this kind can serve as routers and hosts, they can forward packets on behalf of other nodes and run user applications.

The roots of mobile ad-hoc networking can be traced back to 1968, when work on the ALOHA network was initiated in order to connect educational facilities in Hawaii. Although fixed stations were employed, the ALOHA protocol lent itself to distributed channel access management, and hence provided a basis for the subsequent development of distributed channel access schemes which were suitable for ad-hoc networking. The ALOHA protocol itself was a single-hop protocol - which means that it did not inherently support routing. Instead, every node had to be within reach of all other participating nodes. In 1973, inspired by the ALOHA network and the early development of fixed network packet switching, DARPA began its work on the so-called Packet Radio Network (PRnet) - a multi-hop network. In this context, "multi-hopping" means that nodes in a mobile network cooperate in order to relay traffic on behalf of each other to reach distant stations that would otherwise be out of range. PRnet provided mechanisms for centrally managing operation as well as on a distributed basis. As an additional benefit, it was realized that multi-hopping techniques increased network capacity since the spatial domain could be reused for concurrent but physically separated multi-hop sessions. When developing the IEEE 802.11 - a standard for wireless local area networks (WLANs) - the Institute of Electrical and Electronic Engineering (IEEE) replaced the term "packet radio networks" by "ad-hoc networks".

Mobile ad-hoc networks (MANETs) have been the focus of many recent research and development efforts. Originally, they were considered for military applications, where a decentralized network configuration is an operative advantage or even a necessity. In the commercial sector, equipment for wireless, mobile computing has not been available at a price attractive to large markets. However, as the capacity of mobile computers increases steadily, the need for unlimited networking is also expected to rise. Commercial ad-hoc networks could be used in situations where no infrastructure (fixed or cellular) is available. Examples include rescue operations in remote areas, or scenarios where local coverage must quickly be provided at a remote construction site. Ad-hoc networking could also serve as wireless public access in urban areas, providing quick deployment and extended coverage. The access points (APs) in networks of this kind could serve as stationary radio relay stations that perform ad-hoc routing among themselves and between user nodes. Some of the APs would also provide gateways over which users could be connected to a fixed backbone network.

At the local level, ad-hoc networks that link notebook or palmtop computers could be used to spread and share information among participants at a conference. They might also be appropriate for applications in home networks where devices can communicate directly to exchange information, such as audio and/or video, alarms, and configuration updates. Perhaps the most far-reaching applications in this context are more or less autonomous networks of interconnected home robots that clean, do dishes, mow the lawn, perform security surveillance, and so on. Recently, ad-hoc multi-hop networks were proposed for environmental monitoring, in which said networks could be used to forecast water pollution or to provide early warnings of an approaching tsunami. Short-range ad-hoc networks can simplify intercommunication between various mobile devices (such as a cellular phones and a PDA) by forming a so-called "Personal Area Network" (PAN), and thereby eliminate the need for cables. This could also extend the mobility provided by the fixed network to nodes of an ad-hoc network domain. The Bluetooth system is perhaps the most promising technology in the context of PANs.

Today, the vision of ad-hoc networking includes scenarios of people using numerous portable devices in their professional and private lives, such as laptops, mobile phones, PDAs and mp3 players, which can be networked on an ad-hoc basis. Thereby, a user's devices can both be interconnected with others and be connected to local information points - for example, to retrieve updates on flight departures, gate changes, and so on. Ad-hoc devices can also relay traffic between devices which are out of range. The above-mentioned airport scenario thus contains a mixture of single and multiple radio hops. If their applications could interact directly, participants at a meeting could share documents or presentations, and business cards would automatically be directed to the address register on a laptop and/or the number register of a mobile phone. As commuters exit a train, their laptops could remain online. Likewise, incoming e-mails could be diverted to their PDAs. Finally, when entering the office, all communication could automatically be routed through the wireless corporate campus network. All these examples of spontaneous, ad-hoc wireless communication between devices can loosely be defined as "ad-hoc networking". Thereby, mobile devices are allowed to establish communication anytime and anywhere without the aid of a central infrastructure.

Typically, mobile ad-hoc networks (MANETs) operate with distributed functions and allow traffic to pass over multiple radio hops between a source and a destination. Routing algorithms and the implications of radio layers are typical features of these networks. The inherent unpredictability in a network whose nodes move poses a challenge to routing and mobility functions if data is consistently transferred between the nodes of the underlying network. Nonetheless, multi-hop radio systems also make it possible to save battery capacity while retaining performance.

In any case, the most attractive property of an ad-hoc networking model is perhaps its independence from centralized control and, thus, the increased freedom and flexibility it gives the user. Ad-hoc networks have mostly been used in the military sector, wherein being able to establish ad-hoc communication is often a necessity. On the other hand, in the commercial sector, successful examples of ad-hoc radio networks are rare, aside from small-scale PANs emerging in response to the introduction of short-range radio technologies, such as Bluetooth. Here, ease of use and flexibility are driving the demand for ad-hoc operation.

In particular, ad-hoc Bluetooth networks, so-called "scatternets", will give rise to a whole new set of business and consumer applications for small, battery-driven user devices, such as mobile phones, PDAs, and notebook computers. The combination of wide-area IP connectivity via UMTS (mobile phone) access, and connectivity in a PAN presents new opportunities for users being on the go. On that score, end-to-end IP networking is a key component providing the basis on which applications for PAN products can be developed. Thus, the current development of IP support in Bluetooth networks is crucial. Due to its inherent flexibility, ad-hoc networking is easy to deploy. For example, users could set up ad-hoc networking groups using fewer LAN access points and potentially less transmitting power. However, products applying the concepts of ad-hoc networking will most likely be used in the personal area range. These products will mainly focus on facilitating communication between a user's personal devices - either for local traffic or as gateways to the Internet. The ad-hoc network functionality will also enable the interconnection of different users' devices - for instance, to facilitate larger ad-hoc working groups. The intrinsic ability to create generic, small-scale ad-hoc networks in portable devices represents an entirely new area for future applications based on MANETs.

In order to put ad-hoc networking in its right perspective, some observations about wireless communication, beginning with present-day cellular systems, which have to rely on the infrastructure, shall be made in the following sections.

In a typical present-day cellular system coverage is provided by the base stations, radio resources are managed from a central location, and a plurality of services is integrated into the system. Far from central management, a user has to rely on pure ad-hoc operation, which can also be classified in terms of single or multiple hops. Without having fully relinquished control, but given the direct mode of communication in HiperLAN/2 (H2), adjacent terminals can directly communicate with each other. Thus, the transport of traffic is not entirely dependent on the coverage provided by access points. Dependency on centrally administered coverage is further reduced when end-user terminals relay traffic in a multi-hop fashion between other terminals and a base station (cellular multi-hop). A similar approach applies to commercial or residential wireless local loop (WLL) multi-hop access systems, which are primarily conceived for Internet access. Fully decentralized radio, access and routing technologies - enabled by Bluetooth, IEEE 802.11 ad-hoc mode, PRnet stationless mode, mobile ad-hoc networks (MANETs), and concepts such as personal area networks (PANs) or PAN-to-PAN communication fit more or less into the ad-hoc domain. The MANET initiative by the Internet Engineering Task Force (IETF) also aims to provide services via fixed infrastructure connected to the Internet.

In contrast to traditional wire-bound or wireless networks, an ad-hoc network could be expected to operate in a network environment in which some or all the nodes are mobile. In this dynamic environment, network functions must run in a distributed fashion since nodes might suddenly appear in or disappear from the network. In general, however, the same basic user requirements for connectivity and traffic delivery which apply to traditional networks also apply to ad-hoc networks.

In the following, some typical operational characteristics of MANETs shall briefly be discussed, and how they affect the requirements for related networking functions. Thereby, the case of PAN-oriented ad-hoc networks involving a mix of notebook computers, cellular phones and PDAs shall be investigated.

- Distributed operation: A node in an ad-hoc network can not rely on a network in the background to support security and routing functions. Instead, these functions must be designed in such a way that they can efficiently operate under distributed conditions.

- Dynamic network topology: In general, the assumption of mobile nodes will result in a varying network topology. Nonetheless, connectivity in the network should be maintained to allow applications and services to operate without being disrupted. Consequently, the demand for connectivity will influence the design of routing protocols. Moreover, a user in the ad-hoc network will also require access to a fixed network (such as the Internet) even if nodes are moving around. This calls for mobility management functions that allow network access for devices located several radio hops away from the respective network access point (AP).

- Fluctuating link capacity: The effects of high bit-error rates might be more profound in a multi-hop ad-hoc network, since the aggregate of all link errors is what affects a multi-hop path. Additionally, more than one end-to-end path can use a given link, which, if the link should break, could disrupt several sessions during periods of high bit-error transmission rates. Hereby, the routing function is affected, but efficient functions for link layer protection such as forward error correction (FEC) and automatic repeat request (ARQ) can substantially improve the link quality.

- Low-power devices: In many cases, the network nodes will be battery-driven, which will make the power budget tight for all the power-consuming components in a device. This will affect, for instance, CPU processing, memory size, signal processing, and the output/input power of the employed transceiver. The communication-related functions (basically the entire protocol stack below the applications) directly burden the application and services running in the device. Thus, the algorithms and mechanisms which implement the networking functions should be optimized for lean power consumption in order to save capacity for the applications while still providing good communication performance. Besides achieving reasonable network connectivity, the introduction of multiple radio hops might also improve overall performance, given a constrained power budget. Today, however, this can only be realized at the expense of a more complex routing.

To improve user perception of the service, user applications running over an ad-hoc network could be developed being able to adapt to sudden changes in transmission quality. QoS support in an ad-hoc network will affect most of the networking functions discussed above, especially routing and mobility. In the following sections, three of the MANET functions briefly mentioned above, concerning security, routing, and mobility, shall briefly be explained.

- Security: Obviously, providing security is an important task in an ad-hoc network, in particular if multiple hops are employed. From a purely cryptographic point of view, ad-hoc services do not imply many problems. The requirements regarding authentication, confidentiality, and integrity or non-repudiation are the same as for many other public communication networks. However, in a wireless ad-hoc network, trust is a central problem. Since a user can not trust the medium, his/her only choice is to apply encryption methods which force him/her to rely on the cryptographic keys used. Thus, the basic challenge is to create trusted relationships between keys without the aid of a trusted third-party certification. Since ad-hoc networks are spontaneously created between entities being at the same physical location, there is no guarantee that every node holds the trusted public keys to other nodes or that they present certificates being trusted by other parties. However, if trust is allowed to be delegated between nodes, nodes that already have established trusted relationships can extend this privilege to other members of the group.

- Routing: For mobile ad-hoc networks, the issue of routing packets between any pair of nodes becomes a challenging task because the nodes can randomly move within the network. A path that was considered optimal at a given point in time might not work at all a few moments later. Furthermore, the stochastic properties of the wireless channels add to the uncertainty of path quality. Traditional routing protocols maintain routes to all nodes, including nodes to which no packets are being sent. They react to any change in the topology even if no traffic is affected by the change, and they require periodic control messages to maintain routes to every node in the network. The rate at which these control messages are sent must reflect the dynamics of the network in order to maintain valid routes. Thus, scarce resources such as power and link bandwidth will be used more frequently for control traffic as node mobility increases. An alternative approach involves establishing reactive routes, which dictates that routes between nodes are determined solely when they are explicitly needed to route packets. This prevents the nodes from updating every possible route in the network, and instead allows them to focus either on routes that are being used, or on routes that are in the process of being set up.

- Mobility functions: In present-day cellular networks, node and user mobility are handled mainly by means of forwarding. Thus, when a user circulates outside his home network, any calls directed to him/her will be forwarded to the visiting network over his/her home network. The same forwarding principle applies to a mobile IP. A user, or actually the node with the IP interface, can also continue to use an IP address outside the sub-network to which it belongs. A roaming node that enters a foreign network is associated with a c/o address provided by a foreign agent (FA). In the home network, a home agent (HA) establishes an IP tunnel to the FA using the c/o address. Any packet sent to the roaming node's address is first sent to the home agent, which forwards it to the FA via the c/o address (tunneling). The FA then decapsulates the packet and sends it to the roaming node using the original (home) IP address. The actual routing in the fixed network is not affected by this tunneling method and can use traditional routing protocols such as Open Shortest Path First (OSPF), the Routing Information Protocol (RIP), and the Border Gateway Protocol (BGP). This forwarding approach is appropriate in cases where only the nodes (terminals) at the very edges of (fixed) networks are moving. However, in an ad-hoc network, this is not the case, since the nodes at the center of the network can also move, and the whole network is based on the idea of devices serving both as routers and hosts at the same time. Hence, in a MANET, mobility is directly handled by the routing algorithm. If a node moves, thereby forcing traffic another way, the routing protocol takes care of the changes in the node's routing table. In many cases, interworking can be expected between ad-hoc and fixed networks. This would make it possible for a user on a trip who takes part in a laptop conference, but wants mobility, to be reachable via the fixed IP network. Moreover, since the user wants to be reachable from the fixed network, a mobile IP would be a convenient way of making him reachable through the fixed IP network. If the user is located several radio hops away from the access point, a mobile IP and the ad-hoc network routing protocol must interwork to provide connectivity between the traveling user and his unit's peer node, which is located in the fixed network or in another ad-hoc network.

A mobile IP for mobile ad-hoc networks (MIPMANET) is designed to give nodes in ad-hoc networks access to the Internet and the services of a mobile IP. The solution uses mobile IP foreign agents as access points (APs) to the Internet to keep track of the ad-hoc network in which any given node is located, and to direct packets to the edge of said ad-hoc network. The ad-hoc routing protocol is used to deliver packets between the foreign agent and the visiting node. A layered approach which employs tunneling is applied to the outward data flow to separate the mobile IP functionality from the ad-hoc routing protocol. This makes it possible for MIPMANET to provide Internet access by enabling nodes to select multiple access points and to perform seamless switching between them.

In a multi-hop scenario, it makes sense not to waste more energy than each hop requires. In essence, the key to conserving energy is to control the transmit power, in order to compensate for path losses that occur when a message is sent between adjacent nodes. In a network scenario with little data traffic, the overall power consumption can be reduced by approximately a factor of

$$F := N^{\alpha-1},$$

wherein

N is the number of equidistant hops between the source and the destination, and
$\alpha$ is the propagation constant (with $\alpha \geq 2$).

In theory, $\alpha$ is equal to 2 for free space propagation. But for realistic environments, it is often assigned a value of 3 or 4. To derive said factor F, first the propagation loss (L) must be described in terms of its relationship to the distance (R) between the source and the destination:

$$L \sim R^{\alpha}.$$

For a correct reception at a given level of receiver noise, a minimum receiving power $P_{RX,min}$ is required. Accordingly, the transmit power $P_{TX,1}$ for one hop over the distance R is given by

$$P_{TX,1} \sim P_{RX,min} \cdot L = P_{RX,min} \cdot R^{\alpha}.$$

If the distance (R) is divided into N hops, then each individual hop requires the transmit power $P_{TX,N}$ given by

$$P_{TX,N} = \frac{P_{TX,1}}{N^{\alpha}} \sim P_{RX,min} \cdot \left(\frac{R}{N}\right)^{\alpha} .$$

Thus, the overall end-to-end reduction in transmit power is $N^{\alpha-1}$. Thereby, many detrimental factors, such as unequal hop ranges, re-transmissions, and the characteristics of fading channels, are excluded. Compared to the single-hop case, given $\alpha = 3.5$ and $N = 16$, the overall theoretical end-to-end transmit power per packet is reduced by 1,000 times or 30 dB. However, in a MANET, connectivity usually needs to be maintained between neighbors and routing information needs to be distributed. Thus, in highly mobile situations, the control traffic required in a multi-hop network might consume a noticeable amount of energy, even in the absence of data traffic. A direct benefit of controlling power over short-range transmissions is that it can reduce the total interference level in a homogeneous multi-hop network with multiple communicating nodes and fixed traffic.

Obviously, when transmit power is limited, it might not be possible to reach the desired station without multiple hops. On the other hand, because the maximum size of messages is fixed, too many hops will increase delay. This implies that a given number N of hops can provide a minimum delay under transmit power constraints and a given message size.

In summary, multi-hopping is beneficial, since it conserves transmit energy resources, reduces interference, and increases overall network throughput. Multi-hopping is also indispensable to provide any kind of connectivity between very distant terminals.

BRIEF DESCRIPTION OF THE PRESENT STATE OF THE ART

According to the state of the art, different techniques are already available concerning mobile ad-hoc networks, each of them being optimized to a specific application environment. In order to understand the context of the underlying invention, it is necessary to briefly explain the main features involved with said techniques.

Bluetooth networking

Nowadays, Bluetooth networking technology is deemed as the key component in the context of techniques providing short-range wireless connectivity. The main purpose of Bluetooth is to replace cables between electronic devices, such as telephones, PDAs, laptop computers, digital cameras, printers, and fax machines by using a low-cost radio chip.

Bluetooth is a wireless communication technology that uses a frequency-hopping scheme in the unlicensed Industrial Scientific Medical (ISM) band at 2.4 GHz. Thereby, two or more Bluetooth units sharing the same channel form a piconet. Within a piconet, a Bluetooth unit can play either of two roles: master or slave. Each piconet may only contain one master and up to seven active slaves. Any Bluetooth unit can become a master in a piconet. Furthermore, two or more piconets can be interconnected, forming what is called a "scatternet". The connection point between two piconets consists of a Bluetooth unit that is a member of both piconets. A Bluetooth unit can simultaneously be a slave member of multiple piconets, but only a master in one. Moreover, because a Bluetooth unit can only transmit and receive data in one piconet at a time, its participation in multiple piconets has to be on a time-division multiplex basis. The Bluetooth system provides duplex transmission based on slotted time-division duplex (TDD), in which the duration $T_s$ of each slot is 0.625 ms. Finally, it must be mentioned that there is no direct transmission between slaves in a Bluetooth piconet, only from a master to a slave and vice versa.

Communication in a piconet is organized in such a way that the master polls each slave according to a polling scheme. A slave is only allowed to transmit after having been polled by the master. The slave will start its transmission in the slave-to-master time-slot immediately after having received a packet from the master. The master may or may not include data in the packet used to poll a slave. However, it is possible to send packets that cover multiple slots. These multi-slot packets may be either three or five time slots long.

Scatternet-based PANs

Bluetooth networks will most likely be used to interconnect devices such as cellular phones, PDAs, consumer electronics devices and notebook computers - in other words, over a PAN. The PAN itself can be a Bluetooth-based IP network (or based on other protocols) which will be based on a single piconet topology or in a scatternet topology. However, when a PAN user wants to be connected to one or more other PANs, Bluetooth scatternet capability will serve as the foundation for the IP network. Similarly, if one or more PANs are connected to an Internet access point on a LAN (a so-called Network access point, NAP) a scatternet will provide the underlying Bluetooth infrastructure. In the near future a combination of PAN interconnection and Internet access can be expected. In addition, Internet access to one PAN or several interconnected PANs can be provided by using a cellular phone (e.g. via GPRS/UMTS) as a bridge or router gateway. Scatternets can also be rearranged to give better overall performance. For instance, if two slave nodes need to communicate, it might be wiser to create a new piconet that solely contains these two nodes. The nodes can still be part of their original piconets if traffic flows to or from them, or if they need to receive control information. Since the Frequency-Hopped Spread Spectrum (FHSS) system makes Bluetooth very robust against interference, new piconets gain substantially more capacity than they lose as a result of increased interference between them.

Scatternet functionality

The concept of scatternets offers a flexible way of creating Bluetooth networks and introduces a number of Bluetooth-specific functions. Ideally, these functions should be kept in the background to keep them from bothering the user of the Bluetooth network and to facilitate the development of applications. The Bluetooth networking functions fall into three main areas: scatternet forming and maintenance, scatternet-wide packet forwarding, and intra-/inter-piconet scheduling.

Scatternet forming

In order to have an efficient infrastructure for IP networking on Bluetooth, piconets and scatternets must be able to adapt to the connectivity, traffic distribution, and node mobility in the network. This is mainly achieved by setting up new piconets or terminating others, in order to attain the optimal scatternet topology. In this context, the optimum refers to a scatternet that, for instance, yields minimum delay or maximum throughput. But it could also mean minimizing energy consumption in network nodes. To ensure ad-hoc operation, the function for forming and maintaining scatternets must be distributed.

Packet forwarding in a scatternet

Forwarding - or routing or bridging - becomes necessary when packets must traverse multiple hops between the source and destination nodes. Given that the IP will be one of hte most important protocol in scatternet contexts, one might conclude that routing or bridging over the scatternet should be handled within the IP layer. However, there are good arguments for taking another course.

- The current IP dynamic host configuration protocols (DHCP) and emerging zero-configuration methods rely on link layer connectivity. These protocols are typically used to attain a dynamic IP address for an IP host or to select a random IP address. Generally, the protocols will not work beyond an IP router, which means that they will not reach nodes located more than one Bluetooth hop away in an IP-routed scatternet or Ethernet bridging.

- To operate efficiently, the routing function should be joined with the function for forming scatternets. A routing function on the IP layer would thus need to be adapted to or interact very closely with the underlying Bluetooth layer, which violates the idea of keeping the IP layer independent of the link layer technology.

- IP routing is typically performed between networks with different link layer technologies or to separate different network domains. Scatternets only use Bluetooth technology and typically belong to only one network domain. In summary, the best way of providing networking in a Bluetooth scatternet is to perform the routing on a network layer residing below the IP. This layer will be able to interact closely with the Bluetooth baseband functions during the establishment or shutdown of a Bluetooth-specific piconet, and provide a broadcast segment-like interface to the IP.

Other mobile ad-hoc technologies refer to the standards IEEE 802.11 and HiperLAN/2 (H2), which shall briefly be described in the following sections.

The IEEE 802.11 specification is a wireless LAN standard that specifies a wireless interface between a client and a base station (BS) or access point (AP), as well as between wireless clients. IEEE 802.11 defines two physical characteristics for radio-based WLANs: Direct Sequence Spread Spectrum (DSSS), and Frequency-Hopped Spread Spectrum (FHSS), both of which operate on the 2.4 GHz ISM band.

A HiperLAN/2 (H2) network has a centralized mode (CM) in which mobile terminals communicate with access points (AP) over the air interface as defined by the HiperLAN/2 standard. The user of a mobile terminal (MT) can move around freely in the HiperLAN/2 network, which ensures that the terminal, and hence, the user, gets the best possible transmission performance. The development of a high-speed transmission environment with a controlled quality of service (QoS) has been the main focus regarding the design choices for the H2 network. The rate of the H2 network will give up to 54 Mbit/s on layer 3, and it will operate in the 5 GHz frequency band. The connection-oriented nature of H2 makes it easy to implement support for QoS. Each connection can be assigned a specific QoS, for instance in terms of bandwidth, delay, and bit error rate (BER). This type of QoS support combined with high transmission rates will facilitate simultaneous transmission of many different types of data stream, such as video and audio. H2 also provides a direct mode (DM) of communication between MTs, which means that it has some of the properties which fit into the ad-hoc network category. However, an AP needs to control communication between MTs. Thus, any two given H2 mobile terminals can not communicate on an ad-hoc basis without having an AP within reach. This differs from the IEEE 802.11 way of managing ad-hoc communication.

DEFICIENCIES AND DISADVANTAGES OF THE KNOWN SOLUTIONS OF THE PRESENT STATE OF THE ART

With the arrival of personal area network (PAN) technologies such as Bluetooth, HomeRF and others, mobile devices have means to spontaneously communicate with each other. This ability is already be used for

- exchanging information objects (e.g. beaming of address cards, calender entries, etc.),

- participating in group communication activities such as multi-user games,

- using the intermediate nodes as routers to connect mobile nodes to network attach points out of reach of the mobile node,

- communicating with devices in the vicinity, e.g. for invoking services.

Since these abilities offer some exciting opportunities for a new development, they also imply several disadvantages:

- As there is no central control or authority, usually all interactions are carefully controlled by human users.

- Security issues are arising as there might be attacks on the mobile device, e.g. through draining their batteries by constantly using them as an intermediate router.

- The services offered to nearby devices need to be standardized. Furthermore, they must be made available to all users.

- In a spontaneous and unmanaged network, there is no secure way to reward other nodes for the offered service, e.g. by means of some form of kickback.

Moreover, spontaneous ad-hoc networks circumvent the business models used by mobile network operators. Consequently, some problems might arise for the network operators:

- Since users can directly exchange information, there is no real requirement why they have to pay money to the network operators. Thus, problems arise as their revenues might decrease.

- With ad-hoc networks, mobile devices might simply change to a cheaper network access point (AP) offering a higher bandwidth.

OBJECT OF THE UNDERLYING INVENTION

In view of the explanations mentioned above it is the primary object of the underlying invention to propose a technology enhancing traditional mobile telecommunications architectures by supporting ad-hoc networking and ad-hoc scenarios, including authentication, authorization and accounting (AAA) issues.
This object is achieved by means of the features of the independent claims. Advantageous features are defined in the dependent claims. Further objects and advantages of the invention are apparent in the detailed description which follows.

BRIEF DESCRIPTION OF THE DRAWINGS

Further advantages and possible applications of the underlying invention result from the subordinate claims as well as from the following description of the preferred embodiment of the invention which is depicted in the following drawings:

Fig. 1    shows an overview diagram 100 of different mobile communication scenarios in a wireless network environment,

Fig. 2    illustrates an end terminal architecture 200 dealing with ad-hoc networking, ad-hoc computing and security issues,

Fig. 3    shows a moving platform example 300 exhibiting the interaction among different networks "on the move",

Fig. 4    presents a table 400 showing a model for distributed carry-on services, and

Fig. 5    shows a block diagram 500 of the network discovery manager (NDM).

SUMMARY OF THE INVENTION

The proposed solution is basically dedicated to the idea of combining the ability to execute a spontaneous ad-hoc network connection with the security, reliability and ease-of-use offered by the mobile network operators. This can be called a network-assisted ad-hoc network. Thereby, the basic idea can be applied to a plurality of products and within a plurality of different environments. Some advantageous characteristics of said networks are:

- A network-managed ad-hoc communication can rely on the security infrastructure of the mobile network. In this way, the confidence users are putting in this type of communication might increase and would open the way for better services.

- Network operators could offer services being exclusively used by their customers. The ability to directly communicate with customers of the same network, probably free of charge, might attract more people and draw them into the same network.

- By realizing the concept of the underlying invention, network operators could offer additional services to be automatically used by the customers. For example, they might offer a printing service allowing their mobile customer to print information whenever required. Billing would be done over the mobile network. Additionally, the network operator would simply operate as a broker connecting the device to the service required. Owing to the additional network traffic generated by means of the used services, the revenues of the broker would continuously rise. Services could be physical offerings close to the user (e.g. location-based environment services) or immaterial services such as a storage service.

[0042]    - Network-assisted ad-hoc networks might offer rewards to users providing services to other users in their vicinity (e.g. friend points).
The basic concept of the underlying invention can advantageously be employed in the scope of a business model, thereby concerning the following key actors:

- Mobile users: A mobile user is any user owning a mobile computing device which comprises wireless access and ad-hoc network capabilities.

- Mobile communication network subscribers: This includes any user owning a mobile phone or an equivalent computing device computing device which comprises wireless access and ad-hoc network capabilities.

- Network providers: A network provider can be any business entity managing the operations of cellular access networks or even backbones.

- Service: This concerns any specific hardware and/or software functionality made available to multiple client users via network communications.

- Service providers: A service provider can be any business entity managing the operations of a given service.

- Directory services: They offer clients the possibility to retrieve service information based on partial information such as names and/or types.

- Directory administrators: This includes any business entity managing directory services.

- Application service providers: This can be any business entity managing specific software applications made available to multiple client users via network communications. In the given business case, the focus is on mobile communication support which is used in cellular telecommunication networks.

- Certification authorities: This concerns any business entity providing trust support for any service requiring given levels of authentication. More specifically, certification authorities provide services such as authentication management, digital certificate issuance, certificate management, and name management.

- Billing centers: This can be any business entity managing accountancy with respect to a given service such as cellular communications.

The basic interactions among these actors can be taken from the overview:

1. mobile users vs. mobile users,
2. mobile users vs. mobile communication network sub scribers:

   a) peer-to-peer (direct communication or use of any advertised service),
   b) multi-hop routing,
   c) relay to a cellular network,

3. mobile communication network subscribers vs. mobile communication network subscribers,
4. mobile communication network subscribers vs. network provider,
5. mobile users vs. services (via relay functionality offered by a mobile communication network subscriber),
6. mobile communication network subscribers vs. services,
7. network providers vs. network providers,
8. network providers vs. directory administrators,
9. network providers vs. Application Service Providers (ASPs):

   - mobile communication support (e.g. GSM HLR),
   - tuple space support (e.g. online gaming servers),

10. network providers vs. certification authorities,
11. network providers vs. billing centers.

Use of Ad-hoc Computing Managers (ACMs) for addressing the technology.
With respect to the actors mentioned above and their mutual relationships, in the preferred embodiment of the underlying invention the following ideas based on the extensive use of the Ad-hoc Computing Manager (ACM) concept (or similar developments) are proposed:

1. Mobile users and mobile communication network subscribers are enabled to establish spontaneous ad-hoc networks among themselves by means of

   a) the Device Discovery Manager (DDM) functionality of the ACM for dynamically discovering the presence of peers within the coverage area, and/or
   b) the QoS-based Routing Manager (QRM) functionality of the ACM for dynamically routing messages on a multi-hop fashion which is based on QoS constraints.

2. Mobile users and mobile communication network subscribers can participate in ad-hoc computing scenarios, whereby peers are enabled to discover and access services provided by other peers (and vice versa) with the aid of

   a) the Service Discovery Manager (SDM)'s User Agent (UA) functionality of the ACM for dynamically discovering the characteristics of peers and services,
   b) the Service Discovery Manager (SDM)'s Directory Agent (DA) and Service Agent (SA) functionality for respectively advertising and managing service discovery for any prospective peer,
c) the Tuple Space Manager (TSM) functionality of the ACM for managing any tuple space shared with peers.

3. Mobile users and mobile communication network subscribers can participate in network operator-assisted ad-hoc networks among themselves, according to the functionality indicated in points 1 and 2. In the following, three possible scenarios shall be mentioned:

a) Mobile users can rely on the support of the mobile communication network subscribers for getting access to the cellular network by accessing a specific service hosted on the mobile phones of the mobile communication network subscribers. Authentication, authorization and accounting (AAA) applied by the network provider under the supervision of external billing centers and certification authorities.
b) Both mobile user and mobile communication network subscribers can rely on the ASP support for getting access global tuple spaces, e.g. for playing an online game. In this case the ASP uses the TSM functionality of the ACM.
c) Both mobile user and mobile communication network subscribers can access a specific service hosted by a service provider by relying on network operators to get access to the given service, and directory administrators to individuate the given service. The directory administrators use the SDM/DA functionality of the ACM as described in section 2b). Thereby, said service uses the SDM/SA functionality of the ACM. Authentication, authorization and accounting (AAA) functions are applied by the service provider under the supervision of external billing centers and certification authorities.

4. Network providers can arrange wirelessly interconnected base stations and/or entities being capable of routing which constitute the given access network on an unmanaged basis for targeting exceptional high network traffic conditions (e.g. in case of public events gathering crowds), and/or groups of users located in moving platforms. In both cases, local traffic would only be routed within the given location, thus re-leasing the backbone from a possible congestion. To the extent of allowing mobile routers to discover and select nearby mobile routers, the network providers use the DDM functionality of the ACM as described in section la.

5. Network providers can enforce that only their own mobile communication network subscribers can establish assisted ad-hoc networks. Multiple network providers can agree on a mutual basis on extending this policy to all the mobile communication network subscribers of partner network providers. To the extent of allowing discovering devices and their subscription information, the results of the sheer DDM functionality of the ACM are subject to policing mechanisms according to the above-mentioned rationale.

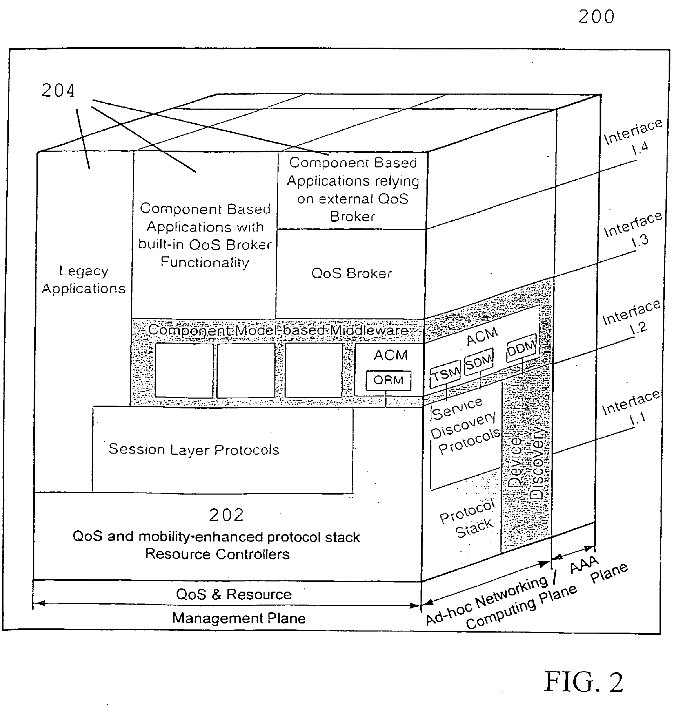

End terminal architecture dealing with ad-hoc networking, ad-hoc computing and security
In order to support this complex technology, the underlying invention proposes an extension of the architecture described in the European patent 00 111 191.3 as depicted in Fig. 2. This extension allows the step-wise induction of ad-hoc networking, ad-hoc computing and AAA features into terminals and/or servers by taking account mobility and QoS aspects as well. However, finer details about AAA issues concerning cross-cutting the overall architecture as described in the European patent mentioned above are not covered by the underlying invention.
The key requirements of the proposed architecture comprise modularity, openness and flexibility:

- Modularity: The employed architecture should be able to guarantee that the existing applications can immediately be used as they are, whereas more complex middleware solutions can elegantly be introduced as soon as they become available.

- Openness: The employed architecture should be able to interact with other architectures. Furthermore, since the herewith proposed architecture is mainly designed for standard protocols and software components such as building blocks, an open and modular designed architecture guarantees that standards providing a more refined support for ad-hoc networking, ad-hoc computing and AAA tasks, which will emerge in the near future, can easily be integrated.

- Flexibility: The employed architecture should be able to support a download of newly-developed advanced components, e.g. featuring standardized interfaces, from a server during runtime in order to enhance the operation of the system.

The following table illustrates the ad-hoc networking and ad-hoc computing support provided by a mobile communication system according to the preferred embodiment of the underlying invention:

| Type of Application | Ad-hoc Networking Support | Ad-hoc Computing Support |
|---|---|---|
| Legacy | Legacy applications can directly access the protocol stack from transport down to physical layers in order to perform device discovery tasks and a QoS-based routing. More advanced legacy applications rely on higher-level, technology specific interfaces. | Legacy applications can directly implement service discovery protocols and natively manage tuple spaces. More advanced legacy applications rely on specific middleware, e.g. service discovery protocols like SLP, Jini, UPnP, Bluetooth's SDP, etc., and tuple space architectures such as JavaSpaces or T-Spaces. |
| Component-based | The DDM and the QRM functionality of the ACM component is used. | The SDM and the TSM functionality of the ACM component is used. |

Finally, it must be noted that the mobile users and mobile communication network subscribers can even more effectively take advantage of peers' resources in ad-hoc networking and computing scenarios by applying the Virtual Device Manager concept disclosed in the European patent 99 124 216.5.

First modification of the invention: Device Profile

As a modification of the invention, the device might further be equipped with a device profile. Said device profile defines which (network) services can be used in which mode. Possible modes are:

1. Service is allowed in the network-assisted mode in order to enable security checks and billing facilities.
2. Service is available to all users.
3. Service is only available to selected user groups (e.g. friends, colleagues, etc.).
4. Service is only available with the direct acceptance of the user (e.g. by requesting the confirmation before using the service).

Second modification of the invention: Network Discovery Manager

The Network Discovery Manager (NDM) is an additional unit that can be combined with the invention. The NDM is a unit that manages the attachment of a device to a network. This assumes that the device is capable of being attached to different networks (e.g. Bluetooth, HiperLAN, GSM, UMTS, etc.). The network discovery includes two stages:

- First, available networks need to be discovered. For example, a Bluetooth device need to find other Bluetooth devices using the INQUIRE scheme, wherein a GSM module checks the pilot channels and an Ethernet module checks whether the response from the line is valid.

- Next, the NDM checks the availability of an appropriate network operator which can be applied to access the network.

For example, GSM networks already provide means to

a) discover the presence of a GSM network, and
b) allow a check of the available network operators and the status of subscription for said operator.

This technology is mainly related to the GSM network and can not be reused for other mobile networks. The NDM abstracts from this by having a sub-module for each of the networks the unit can attach to. Said sub-module does the specific processing for the related network technology.

In the following, two examples for possible applications of the underlying invention shall be presented.

In a first embodiment of the underlying invention, the concept described above can advantageously be applied to the field of "Short Message Services" (SMS). Nowadays, cellular networks offer the SMS service for transmitting typed messages to friends. Using the ad-hoc network mode, a node might first try to establish a direct route between the transmitting mobile station and a target mobile station, in this way delivering the message free of charge. This is especially useful in areas with a high number of users (e.g. fairs, concerts, etc.). The advantages for the users are: a secured and reliable transfer of transmitted SMS free of charge, and a possible feedback that the location of the receiver is nearby.

A second embodiment of the underlying invention is directed to the field of network-operated environment embedded services. These services comprise services which are embedded in the current environment of the user. Conceivable examples could be doors which can be unlocked with the aid of a mobile device, drinks machines which can hand over a refreshment on a request transmitted by a mobile station and public ticket dispensers working on the same principle. Network-assisted spontaneous networks can assist in communicating with the corresponding device, thereby ensuring that both sides can authenticate themselves. The underlying advantage is that the cellular network is not needed.

DETAILED DESCRIPTION OF THE UNDERLYING INVENTION

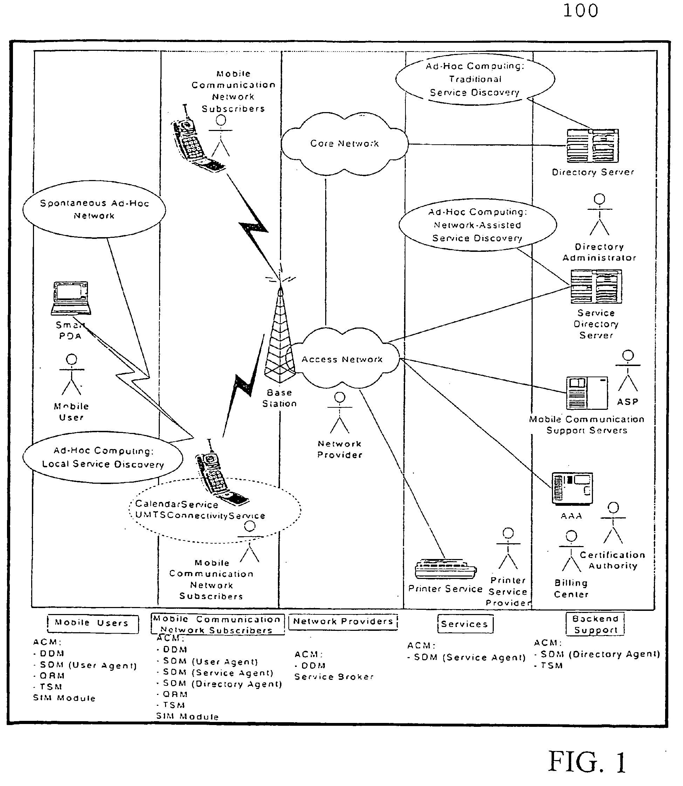

In the following, the preferred embodiment of the underlying invention as depicted in Figs. 1 to 5 shall be explained in detail.

In Fig. 1 an overview diagram 100 is depicted showing different mobile communication scenarios in a wireless network environment. The general scenario can be broken down into different tiers:

- (Disconnected) mobile user: He/she can communicate with other users in his/her vicinity. However, there is no direct connection to the network. A mobile user could be equipped with components like an ad-hoc computing manager or other service components offering services to the environment. A security module (e.g. a SIM card) provides the required security.

- Mobile communication network subscribers: These users can communicate with the cellular network and are equipped with components to communicate in an ad-hoc fashion. Furthermore, a SIM module (or any equivalent security device) helps to secure the communication. A device offering a service could also provide additional components for managing offered services (e.g. a SDM-DA or a SA).

- Network operators: They provide network connectivity to the core network. Moreover, they could offer either direct services or a brokerage function connecting a service provider with other service providers.

- Service tier: In this layer, services are allocated and provided to the mobile users. This service can either be discovered directly (by means of a service discovery step) or provided by the network, possibly in a configured way.

- Back-end support: This tier provides a computing support which allows to execute security functions, billing, brokerage or searching in directories.

Fig. 2 illustrates an end terminal architecture 200 dealing with ad-hoc networking, ad-hoc computing and security issues. It represents the software architecture of fixed and/or mobile terminals as well as server systems - with respect to the use of the ACM concept in a modular, open and flexible manner as described above. The employed ACM sub-units (QRM, DDM, SDM and TSM) provide applications with general Application Programming Interfaces (APIs) which allow the porting of said applications on top of various implementation-specific solutions. Most notably, the QRM masks ad-hoc specific IP routing functionality to applications.

As a modification of the original ACM invention, ACM general APIs can be more abstractly specified as message-based interfaces, thus leading to implementations of ACM based on architectures like Mbus (IETF MMUSIG WG: work in progress).

It has to be noted that the QRM is located in the QoS and resource management plane since this functionality supports ad-hoc networking and ad-hoc computing scenarios with QoS. Instead, the ad-hoc networking, ad-hoc computing plane deals with functionality-specific designed for taking advantage of ad-hoc connectivity.

Moreover, four interfaces (I.1, I.2, I.3 and I.4) are shown in Fig. 2, similar to those proposed in the European patent 00 111 191.3 with respect to QoS and mobility aspects. In this case, the interfaces I.1, I.2 and I.3 indicate three levels of abstractions concerning ad-hoc networking and ad-hoc computing functionality. The ACM concept, though, is limited to the abstraction given by the interface I.3. Underneath the layer of that interface, legacy applications can directly use any implementation-specific solutions, though, to the expense of portability issues. In this context it should be mentioned that aspects such as QoS-based ad-hoc routing and device discovery functionality span several layers of the traditional OSI reference model. However, Fig. 2 does not imply a breaking of the OSI layers but a simplified graphical representation of the proposed architecture. Further details which are not depicted in Fig. 2 are irrelevant with respect to the core idea of the underlying invention.

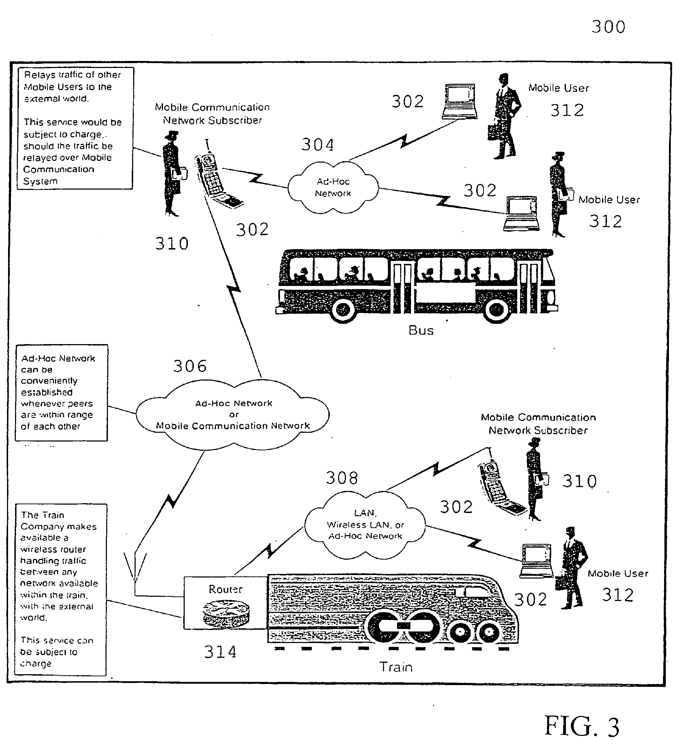

Fig. 3 exhibits a moving platform example 300 exhibiting the interaction among different networks 304 and 308 "on the move". Thereby, mobile ad-hoc networks 304 and 308 as depicted in Fig. 3 can be considered as the cheapest solution when a communication with peers and/or networked services located in the vicinity of a mobile user 312 is initiated. This feature makes even more sense when mobile ad-hoc networks 304 and 308 are located on a moving platform like a car, a bus, a train, a ship or an airplane (provided that radio interference does not disrupt the navigation systems). For example, the passengers 310 sitting in a bus can engage in an online game against each other without needing any networking support from a mobile telecommunication system like GSM or UMTS. To this extent, the employed business model is quite simple: A new participant 312 can freely join a given mobile ad-hoc network 304, provided that he/she is willing to share his/her networking power with the other participants 312 in order to provide multi-hop routing.

However, if an external communication link should be required, for example to the Internet or to other mobile ad-hoc networks 308 which could be located in another geographical region or on another moving platform, some form of additional routing would be required.

If the corresponding nodes are participants 312 of another mobile ad-hoc network 308 located in the vicinity of the above-mentioned bus (e.g. in a train moving close to the road where the bus is currently driving along), any of said participants 312 can relay traffic to the corresponding nodes mentioned above. In this case, two mobile ad-hoc networks 304 and 308 actually join together in order to form a bigger mobile ad-hoc network being the union of the ones mentioned above.

However, if the paths of the train and the bus diverge up to the extent that direct ad-hoc network communication is no longer available, the traffic between the two above-mentioned mobile ad-hoc networks 304 and 308 must be relayed over a mobile telecommunication system like GSM or UMTS. In this case, AAA issues take priority over any other aspect. Thereby, the service provided by the mobile telecommunication systems has to be paid. Furthermore, some of the participants joining said mobile ad-hoc networks 304 or 308 possibly do not have networking capabilities for being connected to mobile telecommunication systems. This means that some of the participants 312 mentioned above may be appointed as a proxy being allowed to route traffic to and/or from the external world on behalf of other participants of the given mobile ad-hoc network 304 or 308.

In the example of the train, the train company may act as a network operator and provide a mobile wireless router 314 and an access network 308 which only serves the train passengers. This service could be offered either for free (the costs already being taken into account in the ticket price), or on some form of charging basis. In any case, all the AAA aspects can easily be addressed by the train company, in cooperation with other network operators and other actors described above. For instance, the train company could issue tickets with Personal Identification Numbers (PINs) printed on top of the tickets. A PIN would then be used for authorizing and authenticating a specific passenger. The validity of the PIN would be limited to the date and the estimated duration of the trip in order to avoid the reuse of the respective service. Additional AAA aspects can then be addressed with conventional e-commerce solutions, e.g. by using credit cards.

Whereas the train scenario appears as a logical extension of traditional business models, the bus scenario involves a set of new concepts. The key issue in this case is that the mobile ad-hoc network 304 is totally spontaneous, in the sense that no third party is regulating the scenario concerning AAA issues. For example, this means that any participant 310 owning a mobile phone 302 would have to restrict the multi-hop routing capabilities to the given mobile ad-hoc network 304 and any other network 306 and/or 308 reachable by using plain mobile ad-hoc network solutions without resorting to mobile telecommunication systems like GSM or UMTS. Moreover, this means that the mobile communication network subscribers 310 can offer their access to mobile telecommunication systems to any peer by providing this feature as a charged service. Other participants 312 (potential clients) can discover said service by using the SDM functionality of the ACM, and then access the service by contacting the given mobile communication network subscriber 310 (the provider).

In order to properly address AAA issues, both clients 312 and providers 310 need to be uniquely identifiable in a trusted manner, especially with respect to billing aspects. For instance, a digital certificate stored in a SIM card can be used for this purpose. A client 312 and a provider 310 would first enter into a negotiation process during which the two peers would exchange their digital certificates and establish a secure communication session. The provider 310 would then relay traffic to the mobile telecommunication system submitting his/her identity and the identity of the client 312. Accordingly, the network provider would charge the client 312 and eventually reward the provider 310 (based on some promotion policies) in cooperation with certification authorities and billing centers.

Depending on whether a connection-based (e.g. GSM) or packet-based (e.g. GPRS) traffic is used for communicating with the mobile telecommunication system, the peering between clients 312 and providers 310 features different requirements. In the former case, in fact, multi-hop routing should be avoided as far as possible since the clients 312 will have to pay for the whole duration of the connection to the external world. Therefore, a client 312 should be connected to a provider 310 by means of a peer-to-peer connection in order to avoid any delay or packet loss caused by multi-hop routing. In case of packet-based traffic, multi-hop routing can be tolerated since this case is not as crucial as the case of connection-based traffic.

Finally, it must be noted that the bus scenario as depicted in Fig. 3 and described above can partially be applied to the train case as well, if one of the train passengers 312 should own a mobile phone 302 and is actually willing to share his/her networking capabilities with any other passenger 312 who have limited networking capabilities, thereby using the mobile ad-hoc network 308.

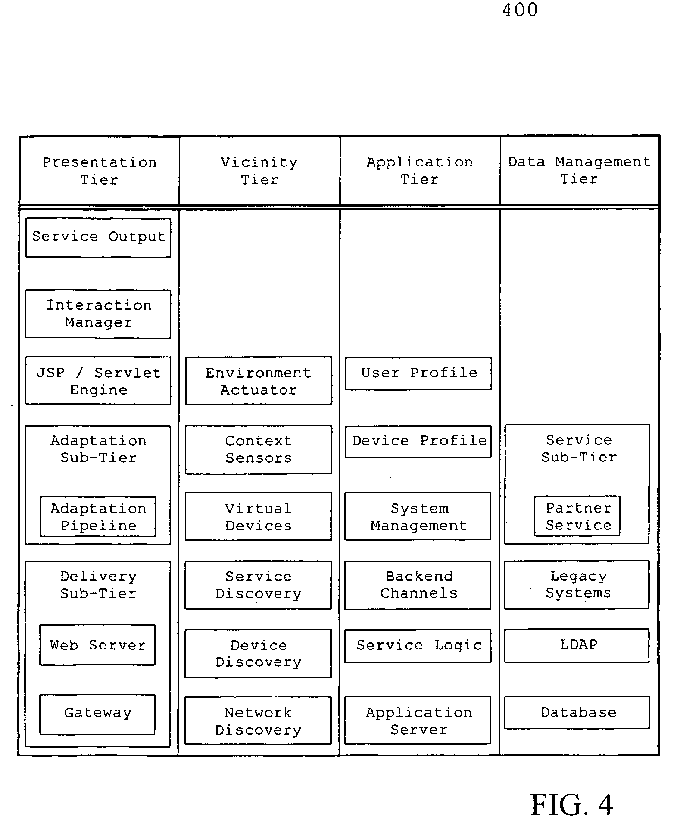

In Fig. 4 a table 400 showing a model for distributed carry-on services is presented. Thereby, the current move from the three-tier model for distributed services including presentation, application and data management to a four-tier model including the vicinity of different users is explained. Since this is a well-known development, the solution as proposed in the European patent 00 125 120.6 ensures that the network operator secures the communication in and with the vicinity tier. By contrast, the proposed solution according to the underlying invention uses this concept for providing mobile users with security when relaying their traffic to the managed network (e.g. to the Internet), for example by using mobile phones owned by mobile communication network subscribers.

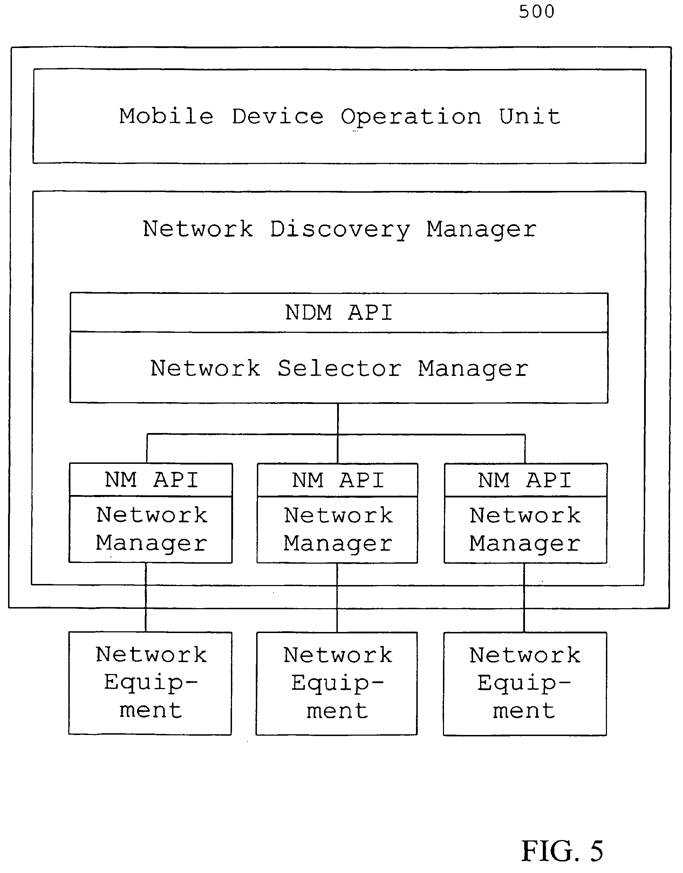

A block diagram 500 of the network discovery manager (NDM) can be taken from Fig. 5. Thereby, the NDM unit is attached to a variety of different network equipment units. Each network equipment unit provides the necessary equipment to discover a network and to be attached to it. This equipment comprises communication processors, RF components, baseband processing units and security modules (e.g. GSM SIM).

A typical NDM consists of several network manager (NM) sub-units, the network selector manager (NSM) and the NDM API unit. The network manager sub-units provide their services by means of the NM API units being connected to the NSM by means of a uniform interface. This ensures that several different network manager sub-units can be plugged in the NSM. Thereby, each network manager sub-unit handles the communication with the associated network equipment. The NSM manages different networks and decides which mobile device is attached to the NDM. The functionality of the NSM can be accessed over the respective NM API units. Thereby, a NDM can be attached to any type of mobile device.

The significance of the symbols designated with reference signs as depicted in Figs. 1 to 5 can be taken from the appended table of reference signs.

In the following, the main advantageous differences between the preferred embodiment of the underlying invention and the state of the art shall be emphasized.

- Assisting spontaneous ad-hoc networking: In the field of network-assisted ad-hoc networking, devices can identify themselves and users by means of the security structure offered by the network operator, e.g. by means of the SIM card. In the ad-hoc networks, only devices and services which are approved by the respective network providers are introduced. Thus, the risk of malicious computers and services can significantly be reduced.

- Cellular networks: As known from the state of the art, adding ad-hoc networks to mobile communication systems can increase the ability of a node to communicate as an intermediate node. Generally, a direct node-to-node communication without using the cellular networks might increase the capacity of a cell, especially if users in the near neighborhood want to communicate.

- Business model and different scenarios: They can be used to extend the current coverage of the employed mobile communication network in order to derive benefit from the spontaneous ad-hoc networking and ad-hoc computing availability. Thereby, network providers can take over different roles (e.g. network provider vs. network providers, mobile communication network subscribers, directory administrators, ASPs, certification authorities and/or billing centers) in order to provide value-added services and thus boost their business. Ad-hoc networking among the users can be performed under the regulation of the network providers, especially concerning AAA aspects. Furthermore, ad-hoc networking within access networks can be enabled, in which auto-configuration features allow rapidly deploying mobile routers for special events. Additionally, ad-hoc computing can be supported, in which AAA issues can be taken into account, including cash flows among various actors.

- Distinction between spontaneous and assisted ad-hoc networks: Network providers can assist spontaneous ad-hoc networks by providing them with AAA functionality and any value-added service. Thereby, network providers can offer security chains for mobile users joining ad-hoc networks. Additionally, network providers can extend their control to the terminal device market (which is already done in the field of GSM) to the case of UMTS, in ad-hoc scenarios and for specific services. Furthermore, network operators can establish mutual agreements among themselves, and offer their services only to the subscriber base.

- End terminal architecture: According to one aspect of the underlying invention, the concepts of the ACM and the QoS framework architecture for dealing with business models and/or scenarios as described above can be reused. For this purpose, a component-based, modular architecture and new planes comprising an ad-hoc networking, ad-hoc computing and AAA issues can be employed.

- Moving platforms: In this scenario, moving networks interacting with each other and with the respective network infrastructure are assumed. The underlying business model consists in mobile communication network subscribers providing traffic relay services to other peers. In this context, the relay mechanism can either be implemented in the protocol stack (thereby being subjected to an external control realized as a customized application programming interface), or at the application level of the underlying OSI reference model. Furthermore, the control and customization of the relay process (for example the filtering of requests to relay packets from nearby peers) can be automated by using the profile information of the peers. Peers joining an ad-hoc network can advantageously use other mobile phones as relay services in order to preserve their limited own battery power: Users owning mobile terminals with plenty of battery power may want to provide a limited and controlled amount of traffic relay capabilities to nearby peers, provided that security aspects and a proper reward scheme are applied. However, dedicated access points with plenty of battery power being sized to manage higher traffic loads would surely be a better solution (when available), e.g. in a train.

- Vicinity tiers: Knowledge of the identity of nearby peers can advantageously be used to enhance the service delivery chain. Thereby, the service processing is customized based on context-related information. An example of a business model is given by networked electronic games, in which peers are enabled to discover each other in an ad-hoc fashion, and retrieve a game context reflecting the composition of the given group of peers from a server in the Internet. For example, this can be the game status relative to the last time the given peers played together. One of a set of nearby peers joining an ad-hoc network can assist the other in dealing with network providers and/or more generally with service providers (e.g. Internet or e-commerce service providers) concerning AAA issues. For this purpose, peers can be enabled to exchange encrypted tokens in an ad-hoc fashion.

Table 1: Depicted Features and their Corresponding Reference Signs

| No. | Feature |
|---|---|
| 100 | overview diagram of different mobile communication scenarios in a wireless network environment |
| 200 | end terminal architecture dealing with ad-hoc networking, ad-hoc computing and security issues |
| 300 | moving platform example exhibiting the interaction among different networks "on the move" |
| 302 | mobile telecommunication device or mobile terminal (MT), here: mobile phone or PDA |
| 304 | mobile ad-hoc communication network for a scenario with a moving bus |
| 306 | mobile (ad-hoc) communication network or mobile communication network (e.g. GSM or UMTS) |
| 308 | LAN, WLAN or mobile ad-hoc communication network for a scenario with a moving train |
| 310 | mobile ad-hoc communication network (MANET) subscriber (e.g. a provider) |
| 312 | mobile ad-hoc communication network (MANET) user/client |
| 314 | mobile wireless router |
| 400 | table showing a model for distributed carry-on services |
| 500 | block diagram of the network discovery manager (NDM) |

Table 2: Used Abbreviations

| AAA | Authentication, Authorization and Accounting |
|---|---|
| ACM | Ad-hoc Computing Manager |
| AP | Access Point |
| API | Application Programming Interface |
| ARQ | Automatic Repeat Request |
| ASP | Application Service Providers |
| BER | bit error rate |

(continued)

| | |
|---|---|
| BGP | Border Gateway Protocol |
| BRAIN | Broadband Radio Access IP Network |
| BS | Base Station |
| CM | Centralized Mode |
| DA | Directory Agent |
| DARPA | Defense Advanced Research Projects Agency |
| DDM | Device Discovery Manager |
| DHCP | Dynamic Host Configuration Protocol |
| DM | Direct Mode |
| DSSS | Direct Sequence Spread Spectrum |
| FA | Foreign Agent |
| FDD | Frequency Division Duplex |
| FEC | Forward Error Correction |
| FHSS | Frequency-Hopped Spread Spectrum |
| GPRS | General Packet Radio Service |
| GSM | Global System for Mobile Communications |
| HA | Home Agent |
| HiperLAN/2 | High Performance Local Area Network (Type 2) |
| IEEE | Institute of Electrical and Electronic Engineering |
| IETF | Internet Engineering Task Force |
| IP | Internet Protocol |
| ISM | Industrial Scientific Medical Band (2.4 GHz) |
| LAN | Local Area Network |
| LAP | LAN Access Point |
| LDAP | Lightweight Directory Access Protocol |
| MANET | Mobile Ad-hoc Network |
| MIND | Mobile IP Network Development |
| MIPMANET | Mobile IP for mobile ad-hoc networks |
| MT | Mobile Terminal |
| NDM | Network Discovery Manager |
| NM | Network Manager |
| NSM | Network Selector Manager |
| OSPF | Open Shortest Path First |
| PAN | Personal Area Network |
| PDA | Personal Digital Assistant |
| PIN | Personal Identification Number |
| PRnet | Packet Radio Network |
| QoS | Quality of Service |
| QRM | QoS-based Routing Manager |

(continued)

| RIP | Routing Information Protocol |
|-----|------------------------------|
| SA | Service Agent |
| SDM | Service Discovery Manager |
| SIG | Special Interest Group |
| SIM | Subscriber Identity Module |
| TDD | Time Division Duplex |
| TSM | Tuple Space Manager |
| UA | User Agent |
| UMTS | Universal Mobile Telecommunications System |
| WLAN | Wireless Local Area Network |
| WLL | Wireless Local Loop |
| WPKI | Wireless Public Key Infrastructure |

Table 3: Used Terminology

| Term | Explanation |
|------|-------------|
| Ad-hoc Computing | This terms refers to an automatic discovery of general-purpose services advertised in a network. The discovery process can be based on predefined information about the respective service name and/or type. |
| Ad-hoc Networking | By contrast, ad-hoc networking means the discovery of automatic devices and the establishment of connectivity among nearby devices in an unplanned, unmanaged fashion. Therefore, a routing of messages can be accomplished on the basis of a multi-hop technique, in which routing functionality is offered by most (if not even all) the nodes participating to the ad-hoc network. |
| Ad-hoc Networks | An ad-hoc network can be any network for mobile communication devices established by using the ad-hoc networking mechanism as described above. For example, it can be an unmanaged, unplanned network of fixed and/or moving intercommunicating computing devices. |
| Assisted Ad-hoc Networks | Likewise, an assisted ad-hoc network can be any network of communication devices established by using the ad-hoc networking mechanism as described above, but under the assistance and control of a so-called network operator providing AAA functionality and value added services. |
| Spontaneous Ad-hoc Networks | They are traditional ad-hoc networks, wherein no assistance from any network operator is provided whatever happens. Eventually, assisted ad-hoc networks fall back to working as spontaneous ad-hoc networks, whenever the involved peers get out of coverage of any access networks. |

**Claims**

1. A communication method for a mobile ad-hoc communication network (304) comprising at least one first user (310) having access to a mobile telecommunication network (306) and at least one second user (312),
   wherein said first user (310) provides access to the mobile telecommunication network (306) to said second user (312), and
   wherein authentication, authorization and accounting (AAA) tasks are realized within said mobile ad-hoc communication network (304) under the regulation of the mobile telecommunication network (306).

2. A method according to claim 1,
   wherein services offered by the mobile telecommunication network (306) are available for said first user (310) and said second user (312) of the ad-hoc communication network (304).

**3.** A method according to claim 1 or 2,
wherein said first user (310) and/or said second user (312) are adapted for obtaining knowledge about available services from said mobile ad-hoc communication network (304).

**4.** A method according to anyone of the preceding claims,
wherein said first user (310) and/or said second user (312) have a tuple space functionality for multimedia application within the context of at least one mobile adhoc communication network (304).

**5.** A method according to anyone of the preceding claims,
wherein said second user (312) is adapted to deliver information to said first user (310), or vice versa, along paths that meet the quality of service (QoS) requirements of the respective multimedia application.

**6.** A method according to anyone of the preceding claims,
wherein the network providers offer security chains for mobile users (310, 312) joining the mobile ad-hoc network (304),
extend their control to the terminal device market to UMTS, ad-hoc scenarios and for specific services, and/or establish mutual agreements among themselves for exclusively offering their services to a subscriber base.

**7.** A computer software program product, implementing a method according to anyone of the preceding claims when running on a computing device.

**8.** A mobile telecommunication device (310) for a mobile ad-hoc communication network (304) and for a mobile telecommunication network (306), said mobile telecommunication device (310) comprising:

    - means for transmitting and receiving information from a mobile ad-hoc communication network (304),
    - an ad-hoc computing manager (ACM) unit for managing a communication with at least one ad-hoc communication device (312) of said mobile ad-hoc communication network (304),
    - means for accessing a mobile telecommunication network (306), and
    - means for providing access to the mobile telecommunication network (306) to said ad-hoc communication device (312) of said mobile ad-hoc communication network (304) and for supporting authentication, authorization and accounting (AAA) tasks that are realized within said mobile ad-hoc communication network (304) under the regulation of the mobile telecommunication network (306).

**9.** An ad-hoc communication device (312) comprising:

    - means for transmitting and receiving information from a mobile ad-hoc communication network (304),
    - an ad-hoc computing manager (ACM) unit for managing a communication with at least one mobile telecommunication device (310) having access to said mobile adhoc communication network (304) and to a mobile telecommunication network (306),
    - means for accessing said mobile telecommunication network (306) via said mobile telecommunication device (310) and for supporting authentication, authorization and accounting (AAA) tasks that are realized within said mobile ad-hoc communication network (304) under the regulation of the mobile telecommunication network (306).

**10.** A device (310, 312) according to claim 8 or 9 comprising:

    - a device discovery manager (DDM) unit for detecting the availability of at least one ad-hoc communication device (312) and/or at least one mobile telecommunication device (310),
    - a service discovery manager unit (SDM) for providing available services from and/or for said mobile ad-hoc communication network (304), and
    - a virtual device manager unit providing a graphical user interface for controlling adhoc communication devices (312), mobile telecommunication devices (310) and/or services of said mobile ad-hoc communication network (304),

**characterized in that**
the device (310, 312) is designed to support value-added services provided in the scope of a business model which enables ad-hoc networking among the users of said mobile ad-hoc communication network (304) under the regulation of network providers.

**11.** A device (310, 312) according to anyone of the claims 9 and 10,
**characterized in that**
said service discovery manager (SDM) unit is adapted for making services available for said mobile ad-hoc communication network (304).

**12.** A device (310, 312) according to anyone of the claims 9 to 11,
**characterized in that**
said service discovery manager (SDM) unit is adapted for obtaining knowledge about available services from said mobile ad-hoc communication network (304).

**13.** A device (310,312) according to one of the claims 9 to 12,
**characterized by**
a tuple space manager (TSM) unit for providing a tuple space functionality for multimedia applications within the context of at least one mobile ad-hoc communication network (304).

**14.** A device (310, 312) according to one of the claims 9 to 13,
**characterized in that**
said ad-hoc computing manager (ACM) unit further controls a quality-based routing manager (QRM) unit for delivering information to a remote ad-hoc communication device (312) and/or mobile telecommunication device (310) along paths that meet the quality of service (QoS) requirements of the respective multimedia application.

**15.** A mobile communication system,
comprising at least one ad-hoc communication device (312) and at least one mobile telecommunication device (310) according to anyone of the claims 8 to 15.

**16.** A mobile communication system according to claim 15,
wherein
a processing system for at least one mobile ad-hoc communication network (304) is employed providing applications with a platform- and network-independent framework for achieving cross-adaptability by providing components for a quality-of-service (QoS) management in said mobile ad-hoc communication network (304).

**17.** A mobile communication system according to anyone of the claims 15 and 16, comprising moving ad-hoc communication networks (304) interacting with each other and with the respective network infrastructure,
**characterized by**
ad-hoc communication device (312) and/or mobile telecommunication device (310) of said ad-hoc communication networks (304) providing traffic relay services to other peers, wherein the relay mechanism can either be implemented in a protocol stack, thereby being subjected to an external control realized as a customized application programming interface, or at the application level of the underlying OSI reference model.

**18.** A mobile communication system according to claim 17,
**characterized in that**
the control and customization of the relay process is automated by using the profile information of the peers.

**19.** A mobile communication system according to anyone of the claims 17 and 18,
**characterized in that**
peers joining a mobile ad-hoc network (304) are designed to use the relay services of a mobile telecommunication device (310) owned by other peers in order to leverage network connectivity either directly or via a mobile wireless router (314).

**Patentansprüche**

**1.** Kommunikationsverfahren für ein Mobil-ad-hoc-Kommunikationsnetz (304), das mindestens einen ersten Anwender (310), der Zugriff auf ein Mobiltelekommunikationsnetz (306) hat, und mindestens einen zweiten Anwender (312) umfasst,
wobei der erste Anwender (310) Zugriff auf das Mobiltelekommunikationsnetz (306) für den zweiten Anwender (312) bereitstellt, und
wobei Authentifizierungs-, Autorisierungs- und Verrechnungs-Aufgaben (AAA-Aufgaben) innerhalb des Mobil-ad-hoc-Kommunikationsnetzes (304) unter der Regulation des Mobiltelekommunikationsnetzes (306) realisiert werden.

2. Verfahren nach Anspruch 1,
wobei Dienste, die von dem Mobiltelekommunikationsnetz (306) angeboten werden, dem ersten Anwender (310) und dem zweiten Anwender (312) des Ad-hoc-Kommunikationsnetzes (304) zur Verfügung stehen.

3. Verfahren nach Anspruch 1 oder 2,
wobei der erste Anwender (310) und/oder der zweite Anwender (312) dazu ausgelegt sind, Wissen über die verfügbaren Dienste von dem mobilen Ad-hoc-Kommunikationsnetz (304) zu erhalten.

4. Verfahren nach einem der vorhergehenden Ansprüche,
wobei der erste Anwender (310) und/oder der zweite Anwender (312) eine Tupelraum-Funktionalität für Multimedia-Anwendungen im Rahmen des mindestens einen Mobil-ad-hoc-Kommunikationsnetzes (304) aufweisen.

5. Verfahren nach einem der vorhergehenden Ansprüche,
wobei der zweite Anwender (312) dazu ausgelegt ist, Informationen an den ersten Anwender (310) entlang von Pfaden, die die Dienstqualität-Anforderungen (QoS-Anforderungen) der jeweiligen Multimedia-Anwendung erfüllen, zu liefern, oder umgekehrt.

6. Verfahren nach einem der vorhergehenden Ansprüche,
wobei die Netzbetreiber Sicherheitsketten für mobile Anwender (310, 312), die dem Mobil-ad-hoc-Netz (304) beitreten, anbieten,
ihre Steuerung auf den Endgerätmarkt auf UMTS, Ad-hoc-Szenarien und spezifische Dienste erweitern, und/oder untereinander gegenseitige Vereinbarungen zum exklusiven Anbieten ihrer Dienste an eine Teilnehmerbasis erstellen.

7. Computersoftwareprogrammprodukt, das ein Verfahren nach einem der vorhergehenden Ansprüche implementiert, wenn es auf einer Rechenvorrichtung ausgeführt wird.

8. Mobiltelekommunikationsvorrichtung (310) für ein Mobil-ad-hoc-Kommunikationsnetz (304) und für ein Mobiltelekommunikationsnetz (306), wobei die Mobiltelekommunikationsvorrichtung (310) Folgendes umfasst:

- Mittel zum Senden und Empfangen von Informationen aus einem Mobil-ad-hoc-Kommunikationsnetz (304),
- eine Ad-hoc-Datenverarbeitungsverwaltungseinheit (ACM-Einheit) zum Verwalten einer Kommunikation mit mindestens einer Ad-hoc-Kommunikationsvorrichtung (312) des Mobil-ad-hoc-Kommunikationsnetzes (304),
- Mittel zum Zugreifen auf ein Mobiltelekommunikationsnetz (306) und
- Mittel zum Bereitstellen von Zugriff auf das Mobiltelekommunikationsnetz (306) für die Ad-hoc-Kommunikationsvorrichtung (312) des Mobil-ad-hoc-Kommunikationsnetzes (304) und zum Unterstützen von Authentifizierungs-, Autorisierungs- und Verrechnungs-Aufgaben (AAA-Aufgaben), die innerhalb des Mobil-ad-hoc-Kommunikationsnetzes (304) unter der Regulation des Mobiltelekommunikationsnetzes (306) realisiert werden.

9. Ad-hoc-Kommunikationsvorrichtung (312), die Folgendes umfasst:

- Mittel zum Senden und Empfangen von Informationen aus einem Mobil-ad-hoc-Kommunikationsnetz (304),
- eine Ad-hoc-Datenverarbeitungsverwaltungseinheit (ACM-Einheit) zum Verwalten einer Kommunikation mit mindestens einer Mobiltelekommunikationsvorrichtung (310), die Zugriff auf das Mobil-ad-hoc-Kommunikationsnetz (304) und ein Mobiltelekommunikationsnetz (306) hat,
- Mittel zum Zugreifen auf das Mobiltelekommunikationsnetz (306) über die Mobiltelekommunikationsvorrichtung (310) und zum Unterstützen von Authentifizierungs-, Autorisierungs- und Verrechnungs-Aufgaben (AAA-Aufgaben), die innerhalb des Mobil-ad-hoc-Kommunikationsnetzes (304) unter der Regulation des Mobiltelekommunikationsnetzes (306) realisiert werden.

10. Vorrichtung (310, 312) nach Anspruch 8 oder 9, die Folgendes umfasst:

- eine Vorrichtungsentdeckungs-Verwaltungseinheit (DDM-Einheit) zum Detektieren der Verfügbarkeit von mindestens einer Ad-hoc-Kommunikationsvorrichtung (312) und/oder mindestens einer Mobiltelekommunikationsvorrichtung (310),
- eine Dienstentdeckungs-Verwaltungseinheit (SDM-Einheit) zum Bereitstellen von verfügbaren Diensten aus dem und/oder für das Mobil-ad-hoc-Kommunikationsnetz (304), und

- eine Verwaltungseinheit für virtuelle Vorrichtungen, die eine graphische Anwenderoberfläche zum Steuern von Ad-hoc-Kommunikationsvorrichtungen (312), Mobiltelekommunikationsvorrichtungen (310) und/oder Diensten des Mobil-ad-hoc-Kommunikationsnetzes (304) bereitstellt,

**dadurch gekennzeichnet, dass**

die Vorrichtung (310, 312) dazu ausgelegt ist, Mehrwert-Dienste zu unterstützen, die im Rahmen eines Geschäftsmodells bereitgestellt werden, das eine Ad-hoc-Vernetzung unter den Anwendern des Mobil-ad-hoc-Kommunikationsnetzes (304) unter der Regulierung von Netzanbietern ermöglicht.

11. Vorrichtung (310, 312) nach einem der Ansprüche 9 und 10,
**dadurch gekennzeichnet, dass**
die Dienstentdeckungs-Verwaltungseinheit (SDM-Einheit) dazu ausgelegt ist, Dienste für das Mobil-ad-hoc-Kommunikationsnetz (304) verfügbar zu machen.

12. Vorrichtung (310, 312) nach einem der Ansprüche 9 bis 11,
**dadurch gekennzeichnet, dass**
die Dienstentdeckungs-Verwaltungseinheit (SDM-Einheit) dazu ausgelegt ist, Wissen über verfügbare Dienste aus dem Mobil-ad-hoc-Kommunikationsnetz (304) zu erhalten.

13. Vorrichtung (310, 312) nach einem der Ansprüche 9 bis 12,
**gekennzeichnet durch**
eine Tupelraum-Verwaltungseinheit (TSM-Einheit) zum Bereitstellen einer Tupelraum-Funktionalität für Multimedia-Anwendungen im Rahmen mindestens eines Mobil-ad-hoc-Kommunikationsnetzes (304).

14. Vorrichtung (310,312) nach einem der Ansprüche 9 bis 13,
**dadurch gekennzeichnet, dass**
die Ad-hoc-Datenverarbeitungsverwaltungseinheit (ACM-Einheit) ferner eine qualitätsbasierte Routing-Verwaltungseinheit (QRM-Einheit) zum Liefern von Informationen an eine entfernte Ad-hoc-Kommunikationsvorrichtung (312) und/oder Mobiltelekommunikationsvorrichtung (310) entlang von Pfaden, die die Dienstqualitäts-Anforderungen (QoS-Anforderungen) der jeweiligen Multimedia-Anwendung erfüllen, umfasst.

15. Mobilkommunikationssystem, das mindestens eine Ad-hoc-Kommunikationsvorrichtung (312) und mindestens eine Mobiltelekommunikationsvorrichtung (310) nach einem der Ansprüche 8 bis 15 umfasst.

16. Mobilkommunikationssystem nach Anspruch 15,
**wobei**
ein Verarbeitungssystem für mindestens ein Mobil-ad-hoc-Kommunikationsnetz (304) dazu eingesetzt wird, Anwendungen mit einer plattform- und netzunabhängigen Rahmenstruktur zum Erzielen einer Queranpassungsfähigkeit durch Bereitstellen von Komponenten für eine Dienstqualitäts-Verwaltung (QoS-Verwaltung) in dem Mobil-ad-hoc-Kommunikationsnetz (304) bereitzustellen.

17. Mobilkommunikationssystem nach einem der Ansprüche 15 und 16, das umfasst, dass sich bewegende Ad-hoc-Kommunikationsnetze (304) miteinander und mit der jeweiligen Netzinfrastruktur interagieren,
**dadurch gekennzeichnet, dass**
eine Ad-hoc-Kommunikationsvorrichtung (312) und/oder eine Mobiltelekommunikationsvorrichtung (310) des Ad-hoc-Kommunikationsnetzes (304) Verkehrsweiterleitungsdienste für andere Peers bereitstellt, wobei der Weiterleitungsmechanismus entweder in einem Protokollstapel implementiert sein kann und dadurch einer externen Steuerung unterworfen ist, die als maßgeschneiderte Anwendungsprogrammierungsschnittstelle realisiert ist, oder auf der Anwendungsebene des zugrundeliegenden OSI-Referenzmodells implementiert sein kann.

18. Mobilkommunikationssystem nach Anspruch 17,
**dadurch gekennzeichnet, dass**
die Steuerung und Maßschneiderung des Weiterleitungsprozesses unter Verwendung der Profilinformationen der Peers automatisiert ist.

19. Mobilkommunikationssystem nach Anspruch 17 oder 18,
**dadurch gekennzeichnet, dass**

Peers, die dem Mobil-ad-hoc-Netz (304) beitreten, dazu ausgelegt sind, die Weiterleitungsdienste einer Mobiltelekommunikationsvorrichtung (310), die im Besitz anderer Peers ist, zu verwenden, um eine Netzverbindungsfähigkeit entweder direkt oder über einen mobilen Drahtlos-Router (314) auszunutzen.

**Revendications**

1. Procédé de communication pour un réseau de communication ad hoc mobile (304) comprenant au moins un premier utilisateur (310) ayant accès à un réseau de télécommunication mobile (306) et au moins un deuxième utilisateur (312),
ledit premier utilisateur (310) fournissant un accès au réseau de télécommunication mobile (306) au dit deuxième utilisateur (312), et
des tâches d'authentification, autorisation et comptabilité (AAA) étant réalisées à l'intérieur dudit réseau de communication ad hoc mobile (304) sous le contrôle du réseau de télécommunication mobile (306).

2. Procédé selon la revendication 1, dans lequel des services offerts par le réseau de télécommunication mobile (306) sont disponibles pour ledit premier utilisateur (310) et ledit deuxième utilisateur (312) du réseau de communication ad hoc (304).

3. Procédé selon la revendication 1 ou 2, dans lequel ledit premier utilisateur (310) et/ou ledit deuxième utilisateur (312) peuvent obtenir des informations concernant des services disponibles à partir dudit réseau de communication ad hoc mobile (304).

4. Procédé selon l'une quelconque des revendications précédentes, dans lequel ledit premier utilisateur (310) et/ou ledit deuxième utilisateur (312) ont une fonctionnalité d'espace de tuples pour une application multimédia à l'intérieur du contexte d'au moins un réseau de communication ad hoc mobile (304).

5. Procédé selon l'une quelconque des revendications précédentes, dans lequel ledit deuxième utilisateur (312) est adapté pour délivrer des informations au dit premier utilisateur (310), ou vice versa, le long de chemins qui répondent aux exigences de qualité de service (QoS) de l'application multimédia respective.

6. Procédé selon l'une quelconque des revendications précédentes, dans lequel les fournisseurs de réseau offrent des chaînes de sécurité pour des utilisateurs mobiles (310, 312) joignant le réseau ad hoc mobile (304),
étendent leur contrôle du marché des dispositifs terminaux à UMTS, aux scénarios ad hoc et pour des services spécifiques, et/ou
établissent des accords mutuels entre eux pour offrir exclusivement leurs services à une base d'abonnés.

7. Produit programme logiciel d'ordinateur, mettant en oeuvre un procédé selon l'une quelconque des revendications précédentes lorsqu'il est exécuté sur un dispositif informatique.

8. Dispositif de télécommunication mobile (310) pour un réseau de communication ad hoc mobile (304) et pour un réseau de télécommunication mobile (306), ledit dispositif de télécommunication mobile (310) comprenant :

   - des moyens destinés à transmettre et à recevoir des informations à partir d'un réseau de communication ad hoc mobile (304),
   - une unité de gestionnaire informatique ad hoc (ACM) destinée à gérer une communication avec au moins un dispositif de communication ad hoc (312) dudit réseau de communication ad hoc mobile (304),
   - des moyens destinés à accéder à un réseau de télécommunication mobile (306), et
   - des moyens destinés à fournir un accès au réseau de télécommunication mobile (306) au dit dispositif de communication ad hoc (312) dudit réseau de communication ad hoc mobile (304) et à prendre en charge des tâches d'authentification, autorisation et comptabilité (AAA) qui sont réalisées à l'intérieur dudit réseau de communication ad hoc mobile (304) sous le contrôle du réseau de télécommunication mobile (306).

9. Dispositif de communication ad hoc (312) comprenant :

   - des moyens destinés à transmettre et à recevoir des informations à partir d'un réseau de communication ad hoc mobile (304),
   - une unité de gestionnaire informatique ad hoc (ACM) destinée à gérer une communication avec au moins un dispositif de télécommunication mobile (310) ayant accès au dit réseau de communication ad hoc mobile (304) et à un réseau de télécommunication mobile (306),
- des moyens destinés à accéder au dit réseau de télécommunication mobile (306) par l'intermédiaire dudit dispositif de télécommunication mobile (310) et à prendre en charge des tâches d'authentification, autorisation et comptabilité (AAA) qui sont réalisées à l'intérieur dudit réseau de communication ad hoc mobile (304) sous le contrôle du réseau de télécommunication mobile (306).

10. Dispositif (310, 312) selon la revendication 8 ou 9 comprenant :

- une unité de gestionnaire de découverte de dispositif (DDM) destinée à détecter la disponibilité d'au moins un dispositif de communication ad hoc (312) et/ou d'au moins un dispositif de télécommunication mobile (310),
- une unité de gestionnaire de découverte de services (SDM) destinée à fournir des services disponibles à partir dudit et/ou pour ledit réseau de communication ad hoc mobile (304), et
- une unité de gestionnaire de dispositif virtuelle fournissant une interface utilisateur graphique permettant de contrôler des dispositifs de communication ad hoc (312), des dispositifs de télécommunication mobiles (310) et/ou des services dudit réseau de communication ad hoc mobile (304),

**caractérisé en ce que**
le dispositif (310, 312) est conçu pour prendre en charge des services à valeur ajoutée fournis dans le cadre d'un modèle métier qui permet un réseautage ad hoc parmi les utilisateurs dudit réseau de communication ad hoc mobile (304) sous le contrôle de fournisseurs de réseau.

11. Dispositif (310, 312) selon l'une quelconque des revendications 9 et 10, **caractérisé en ce que** ladite unité de gestionnaire de découverte de services (SDM) est conçue pour mettre des services à la disposition dudit réseau de communication ad hoc mobile (304).

12. Dispositif (310, 312) selon l'une quelconque des revendications 9 à 11, **caractérisé en ce que** ladite unité de gestionnaire de découverte de services (SDM) est conçue pour obtenir des informations concernant des services disponibles à partir dudit réseau de communication ad hoc mobile (304).

13. Dispositif (310, 312) selon l'une quelconque des revendications 9 à 12, **caractérisé par** une unité de gestionnaire d'espace de tuples (TSM) destinée à fournir une fonctionnalité d'espace de tuples pour des applications multimédia à l'intérieur du contexte d'au moins un réseau de communication ad hoc mobile (304).

14. Dispositif (310, 312) selon l'une quelconque des revendications 9 à 13, **caractérisé en ce que** ladite unité de gestionnaire informatique ad hoc (ACM) contrôle en outre une unité de gestionnaire de routage basée qualité (QRM) destinée à délivrer des informations à un dispositif de communication ad hoc distant (312) et/ou à un dispositif de télécommunication mobile (310) le long de chemins qui répondent aux exigences de qualité de service (QoS) de l'application multimédia respective.

15. Système de communication mobile comprenant au moins un dispositif de communication ad hoc (312) et au moins un dispositif de télécommunication mobile (310) selon l'une quelconque des revendications 8 à 15.

16. Système de communication mobile selon la revendication 15, dans lequel un système de traitement pour au moins un réseau de communication ad hoc mobile (304) est employé qui fournit des applications avec une infrastructure indépendante de la plateforme et du réseau permettant de réaliser une adaptabilité croisée grâce à des composants pour une gestion de qualité de service (QoS) dans ledit réseau de communication ad hoc mobile (304).

17. Système de communication mobile selon l'une quelconque des revendications 15 et 16, comprenant des réseaux de communication ad hoc mobiles (304) interagissant entre eux et avec l'infrastructure réseau respective, **caractérisé par**
un dispositif de communication ad hoc (312) et/ou un dispositif de télécommunication mobile (310) desdits réseaux de communication ad hoc (304) fournissant des services de relais de trafic à d'autres pairs, le mécanisme de relais pouvant être mis en oeuvre dans une pile de protocoles, faisant ainsi l'objet d'un contrôle externe réalisé sous la forme d'une interface de programmation d'applications personnalisée, ou au niveau des applications du modèle de référence OSI sous-jacent.

18. Système de communication mobile selon la revendication 17, **caractérisé en ce que**

le contrôle et la personnalisation du processus de relais sont automatisés à l'aide des informations de profil des pairs.

**19.** Système de communication mobile selon l'une quelconque des revendications 17 et 18, **caractérisé en ce que** des pairs joignant un réseau ad hoc mobile (304) sont conçus pour utiliser les services de relais d'un dispositif de télécommunication mobile (310) détenu par d'autres pairs afin de mettre à profit une connectivité réseau directement ou par l'intermédiaire d'un routeur sans fil mobile (314).

100

FIG. 1

200

204

Legacy Applications

Component Based Applications with built-in QoS Broker Functionality

Component Based Applications relying on external QoS Broker

QoS Broker

Component Model-based Middleware

ACM

ACM

QRM

TSM SDM DDM

Service Discovery Protocols

Device Discovery

Session Layer Protocols

Protocol Stack

202
QoS and mobility-enhanced protocol stack Resource Controllers

QoS & Resource
Management Plane

Ad-hoc Networking / Computing Plane

AAA Plane

Interface 1.4

Interface 1.3

Interface 1.2

Interface 1.1

FIG. 2

300

Relays traffic of other
Mobile Users to the
external world.

This service would be
subject to charge,
should the traffic be
relayed over Mobile
Communication
System

Mobile Communication
Network Subscriber

302

Mobile User

312

304

Ad-Hoc
Network

302

Mobile User

312

310

302

Bus

Ad-Hoc Network
can be
conveniently
established
whenever peers
are within range
of each other

306

Ad-Hoc Network
or
Mobile Communication Network

Mobile Communication
Network Subscriber

308

LAN.
Wireless LAN. or
Ad-Hoc Network

302

310

The Train
Company makes
available a
wireless router
handling traffic
between any
network available
within the train,
with the external
world.

This service can
be subject to
charge.

Router

302

Mobile User

312

314

Train

FIG. 3

400

| Presentation Tier | Vicinity Tier | Application Tier | Data Management Tier |
|---|---|---|---|
| Service Output | | | |
| Interaction Manager | | | |
| JSP / Servlet Engine | Environment Actuator | User Profile | |
| Adaptation Sub-Tier | Context Sensors | Device Profile | Service Sub-Tier |
| Adaptation Pipeline | Virtual Devices | System Management | Partner Service |
| Delivery Sub-Tier | Service Discovery | Backend Channels | Legacy Systems |
| Web Server | Device Discovery | Service Logic | LDAP |
| Gateway | Network Discovery | Application Server | Database |

FIG. 4

500

```
┌─────────────────────────────────────────────────────────────┐
│  ┌───────────────────────────────────────────────────────┐  │
│  │                                                         │  │
│  │        Mobile Device Operation Unit                     │  │
│  │                                                         │  │
│  └───────────────────────────────────────────────────────┘  │
│  ┌───────────────────────────────────────────────────────┐  │
│  │                                                         │  │
│  │        Network Discovery Manager                        │  │
│  │                                                         │  │
│  │    ┌───────────────────────────────────────────────┐   │  │
│  │    │                NDM API                         │   │  │
│  │    ├───────────────────────────────────────────────┤   │  │
│  │    │        Network Selector Manager                │   │  │
│  │    └───────────────────────────────────────────────┘   │  │
│  │                                                         │  │
│  │  ┌───────────┐   ┌───────────┐   ┌───────────┐          │  │
│  │  │  NM API    │   │  NM API   │   │  NM API   │          │  │
│  │  ├───────────┤   ├───────────┤   ├───────────┤          │  │
│  │  │ Network   │   │ Network   │   │ Network   │          │  │
│  │  │ Manager   │   │ Manager   │   │ Manager   │          │  │
│  │  └───────────┘   └───────────┘   └───────────┘          │  │
│  └───────────────────────────────────────────────────────┘  │
└─────────────────────────────────────────────────────────────┘
   ┌───────────┐   ┌───────────┐   ┌───────────┐
   │ Network   │   │ Network   │   │ Network   │
   │ Equip-    │   │ Equip-    │   │ Equip-    │
   │ ment      │   │ ment      │   │ ment      │
   └───────────┘   └───────────┘   └───────────┘
```

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 00111191 A
- EP 99124216 A
- EP 00125120 A